(19) Europäisches Patentamt
European Patent Office
Office européen des brevets

(11) **EP 2 470 885 B1**

(12) **EUROPÄISCHE PATENTSCHRIFT**

(45) Veröffentlichungstag und Bekanntmachung des Hinweises auf die Patenterteilung:
**22.05.2019 Patentblatt 2019/21**

(21) Anmeldenummer: **10751894.6**

(22) Anmeldetag: **24.08.2010**

(51) Int Cl.:
***G01N 21/17*** *(2006.01)*

(86) Internationale Anmeldenummer:
**PCT/EP2010/062334**

(87) Internationale Veröffentlichungsnummer:
**WO 2011/023695 (03.03.2011 Gazette 2011/09)**

(54) **PHOTOAKUSTISCHER SENSOR SOWIE VERFAHREN ZU SEINER HERSTELLUNG UND VERWENDUNG**

PHOTOACOUSTIC SENSOR AND METHOD FOR THE PRODUCTION AND USE THEREOF

CAPTEUR PHOTOACOUSTIQUE AINSI QUE SON PROCÉDÉ DE PRODUCTION ET D'UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **28.08.2009 DE 102009029002**

(43) Veröffentlichungstag der Anmeldung:
**04.07.2012 Patentblatt 2012/27**

(73) Patentinhaber:
• **Fraunhofer-Gesellschaft zur Förderung der angewandten Forschung e.V.**
**80686 München (DE)**
• **Miopas GmbH**
**38640 Goslar (DE)**

(72) Erfinder:
• **SCHADE, Wolfgang**
**38644 Goslar (DE)**
• **KÖHRING, Michael**
**37441 Bad Sachsa (DE)**
• **SCHOSSIG, Tobias**
**38678 Clausthal-Zellerfeld (DE)**

(74) Vertreter: **Friese Goeden Patentanwälte PartGmbB**
**Widenmayerstraße 49**
**80538 München (DE)**

(56) Entgegenhaltungen:

WO-A1-2010/028865    WO-A2-03/104767
WO-A2-2006/001842    JP-A- 5 172 738

• GROBER ROBERT D ET AL: "Fundamental limits to force detection using quartz tuning forks" REVIEW OF SCIENTIFIC INSTRUMENTS, AIP, MELVILLE, NY, US LNKD-DOI:10.1063/1.1150691, Bd. 71, Nr. 7, 1. Juli 2000 (2000-07-01), Seiten 2776-2780, XP012038401 ISSN: 0034-6748
• SAMARA L FIREBAUGH ET AL: "Miniaturization and Integration of Photoacoustic Detection with a Microfabricated ChemicalReactor System" JOURNAL OF MICROELECTROMECHANICAL SYSTEMS, IEEE SERVICE CENTER, PISCATAWAY, NJ, US, Bd. 10, Nr. 2, 1. Juni 2001 (2001-06-01), XP011034631 ISSN: 1057-7157
• SCHONENBERGER C ET AL: "A DIFFERENTIAL INTERFEROMETER FOR FORCE MICROSCOPY" REVIEW OF SCIENTIFIC INSTRUMENTS, AIP, MELVILLE, NY, US LNKD-DOI:10.1063/1.1140543, Bd. 60, Nr. 10, 1. Oktober 1989 (1989-10-01), Seiten 3131-3134, XP000071697 ISSN: 0034-6748
• BREGUET J ET AL: "Photoacoustic detection of trace gases with an optical microphone" SENSORS AND ACTUATORS A, ELSEVIER SEQUOIA S.A., LAUSANNE, CH LNKD-DOI:10.1016/0924-4247(95)00848-9, Bd. 48, Nr. 1, 1. Mai 1995 (1995-05-01), Seiten 29-35, XP004303569 ISSN: 0924-4247

EP 2 470 885 B1

**Beschreibung**

Die Erfindung betrifft einen photoakustischen Sensor, enthaltend einen Resonanzkörper, welcher einen zur Aufnahme nachzuweisender Moleküle bestimmten Raum zumindest teilweise begrenzt und eine Einrichtung zur Erkennung einer Schwingung des Resonanzkörpers.

Aus A. A. Kosterev et al.: Quartz-enhanced photoacoustic spectroscopy, Optics Letters, Vol. 27, No. 21 (2002) 1902 ist eine Vorrichtung der eingangs genannten Art bekannt. Dieses bekannte Nachweisverfahren offenbart die Verwendung eines gabelförmigen Quarzkristalls als hochempfindliches Mikrofon, mit welchem Druckschwankungen in einer Gasphase detektierbar sind. Die Druckschwankungen werden gemäß dem bekannten Verfahren mittels einer Laserdiode erzeugt, welche mittels spektral schmalbandiger Strahlung die Moleküle der Gasphase selektiv anregt. Aufgrund des großen Gütefaktors des zum Nachweis verwendeten gabelförmigen Quarzkristalls kann die Sensitivität der photoakustischen Messungen gesteigert werden.

Das aus dem Stand der Technik bekannte Verfahren weist jedoch den Nachteil auf, dass die Materialauswahl für die Herstellung des gabelförmigen Elementes auf piezoelektrische Materialien beschränkt ist. Daher erfordert die Signalverarbeitung die Messung einer Signalspannung, welche zwischen einigen Pikovolt und einigen Nanovolt liegt. Die Messung dieser kleinen Spannungen ist anfällig gegenüber elektrischen Störsignalen. Weiterhin kann der bekannte photoakustische Gassensor nicht in explosiven Gasatmosphären verwendet werden, da der piezoelektrische Sensor durch Spannungsüberschläge eine Explosion auslösen kann. Schließlich ist auch die Verwendung des bekannten Messverfahrens in heißen Gasatmosphären nicht möglich, da die verwendeten piezoelektrischen Materialien bei zu hoher Temperatur versagen.

Ausgehend von diesem Stand der Technik liegt der Erfindung daher die Aufgabe zugrunde, ein Verfahren zur Gasanalytik anzugeben, welches universell auch bei hohen Temperaturen und in explosionsgefährdeten Bereichen anwendbar ist. Weiterhin soll das Verfahren eine erhöhte Zuverlässigkeit gegenüber elektrischen Störsignalen aufweisen.

Die Patentanmeldung WO2010/028865 gehört zum Stand der Technik im Sinne des Art. 54(3) EPÜ. Dieses Dokument zeigt einen photoakustischen Sensor, wobei ein Resonanzkörper und eine optische Einrichtung zur Erkennung einer Schwingung des Resonanzkörpers in einem einzigen Substrat monolithisch integriert sind.

Der Artikel FIREBAUGH ET AL: "Miniaturization and Integration of Photoacoustic Detection with a Microfabricated Chemical Reactor System" JOURNAL OF MICROELECTROMECHANICAL SYSTEMS, Bd. 10, Nr. 2, 1. Juni 2001 zeigt einen photoakustischen Gassensor mit einer optischen Faser , um die Schwingung eines Resonanzkörpers (Siliziummembran) zu erfassen.

Die Aufgabe wird erfindungsgemäß durch einen photoakustischen Sensor gemäß Anspruch 1, ein Verfahren zum photoakustischen Nachweis von Molekülen gemäß Anspruch 10 und ein Verfahren zur Herstellung eines Sensors wie im Anspruch 12 gelöst.

Erfindungsgemäß wird vorgeschlagen, die in der Gasatmosphäre befindlichen Moleküle durch schmalbandige Laserstrahlung eines Dauerstrichlasers oder durch entsprechend geformte Laserpulse mit einer Dauer von weniger als 200 fs selektiv anzuregen. Zum Nachweis der erfolgten Anregung wird erfindungsgemäß ein photoakustischer Sensor vorgeschlagen, welcher einen Resonanzkörper enthält, welcher einen zur Aufnahme von nachzuweisenden Molekülen bestimmten Raum zumindest teilweise begrenzt. Auf diese Weise kann eine bei der Abregung der optisch angeregten Moleküle entstehende Druckschwankung als photoakustisches Signal nachgewiesen werden.

Die Intensität dieses photoakustischen Signales ist proportional zur Konzentration der nachzuweisenden Moleküle. Unterschiedliche Moleküle können durch unterschiedliche Wellenlängen des zur Anregung verwendeten Laserlichtes oder durch unterschiedlich geformte Pulse eines Kurzzeitlasers mit Pulslängen von weniger als 200 fs angeregt werden. Auf diese Weise kann die Zusammensetzung einer Gasmischung bzw. die Anwesenheit oder Abwesenheit eines nachzuweisenden Moleküls in der Gasmischung überprüft werden.

Das Erkennen der Schwingung des Resonanzkörpers erfolgt gemäß der vorliegenden Erfindung mittels einer Einrichtung zur optischen Erfassung des Ortes von zumindest einer Teilfläche des Resonanzkörpers. In einer anderen Ausführungsform der Erfindung kann der Ort einer Teilfläche des Resonanzkörpers mittels eines Interferenzsignales bestimmt werden. Dieses Verfahren zeichnet sich durch eine sehr große Genauigkeit aus, da der Ort bis auf einen Bruchteil der Wellenlänge des zur Messung verwendeten Lichtes verwendet werden kann. Aufgrund der großen Kohärenzlänge kann vorteilhaft das Licht eines Lasers zur optischen Erfassung des Ortes zumindest einer Teilfläche des Resonanzkörpers verwendet werden.

In einigen Ausführungsformen der Erfindung kann der Resonanzkörper zumindest zwei in etwa parallel angeordnete Elemente aufweisen, welche jeweils mit einem Fußpunkt an einem Verbindungselement fixiert sind und an ihrem dem Fußpunkt entgegengesetzten Ende frei auskragen. Auf diese Weise ergibt sich der optische Eindruck einer Gabel bzw. eines Rechens. Ein solcher Resonanzkörper kann in einigen Ausführungsformen den spektroskopischen Nachweis von gasförmigen Molekülen erleichtern, wenn die zumindest zwei in etwa parallel angeordneten Elemente den Messraum, in welchem sich die nachzuweisenden Moleküle befinden, zumindest teilweise begrenzen. Dadurch wird eine unmittelbare Einwirkung der bei der Anregung der Moleküle entstehenden Druckschwankung auf die zumindest zwei in etwa parallel angeordneten Elemente ermöglicht. Weiterhin erlaubt diese Geometrie eine effiziente Unterdrückung von eingekoppeltem Luftschall, wenn die Länge und/oder der Abstand der zumindest zwei in etwa parallel angeordneten Elemente geringer gewählt wird als die Wellenlänge des auf die Vorrichtung einwirkenden Schalls.

In einigen Ausführungsformen der Erfindung enthält der Sensor zumindest einen Beam-Displacer mit zumindest einem Eingang und zumindest zwei Ausgängen, welcher dazu eingerichtet ist, einen Eingangslaserstrahl in eine Mehrzahl von Ausgangslaserstrahlen aufzuteilen, welche dazu vorgesehen sind, an unterschiedlichen Teilflächen des Resonanzkörpers reflektiert zu werden. Auf diese Weise ergibt sich eine besonders störungsarme und zuverlässige Auswertung der photoakustisch induzierten Schwingung des Resonanzkörpers. Durch die Relexion an zwei Teilflächen, welche mit unterschiedlicher Amplitude schwingen, erfahren die beiden Laserstrahlen eine Phasenverschiebung, die nach dem Zusammenführen beider Strahlen und anschließender Trennung nach Polarisationsrichtung als messbare Intensitätsänderung sehr einfach detektiert werden kann.

Das zur Anregung der nachzuweisenden Moleküle verwendete Laserlicht kann in einigen Ausführungsformen der Erfindung im Freistrahl eingekoppelt werden. Hierzu können in einigen Ausführungsformen der Erfindung optische Elemente wie Schlitze, Blenden oder Linsen eingesetzt werden. In anderen Ausführungsformen der Erfindung kann das zur Anregung der nachzuweisenden Moleküle verwendete Licht mittels eines Wellenleiters zugeführt werden. Hierdurch wird ein besonders platzsparender und störungsunanfälliger Aufbau des erfindungsgemäß vorgeschlagenen Sensors ermöglicht.

In einer ersten Alternative der Erfindung wird der erfindungsgemäß vorgeschlagene Sensor monolithisch in einem einzigen Substrat integriert werden. Das Substrat kann ein optisch transparentes Material enthalten. In einigen Ausführungsformen der Erfindung kann das Substrat Quarzglas oder Saphir oder Magnesiumoxid oder Langasit enthalten. In anderen Ausführungsformen der Erfindung kann das Substrat ein Polymer enthalten. In einer Ausführungsform der Erfindung kann das Substrat Polymethylmethacrylat enthalten.

In einigen Ausführungsformen der Erfindung kann das Substrat mit Hilfe eines gepulsten Lasers bearbeitet werden, so dass sowohl Wellenleiter als auch mechanisch bewegliche Mikrostrukturen in einem optisch transparenten Substrat erzeugt werden. Hierbei kann die Wechselwirkung von Laserpulsen, beispielsweise von Laserpulsen mit einer Dauer von weniger als 250 fs, eine Änderung des Brechungsindex induzieren. Die Änderung des Brechungsindex kann punktweise durch Fokussierung des zur Materialbearbeitung verwendeten Laserstrahles dreidimensional in das Material eingebracht werden. Durch Überlappung der jeweiligen Punkte kann eine Struktur mit einer Längserstreckung in das Material eingebracht werden, beispielsweise ein Wellenleiter. In einigen Ausführungsformen der Erfindung können die zur Materialbearbeitung verwendeten Laserpulse in ihrer Amplitude und/oder Phase moduliert werden.

In einer weiteren Ausgestaltung der Erfindung kann vorgesehen sein, dass mit dem zur Bearbeitung des Substrates verwendeten Laserstrahl belichtete Flächenbereiche im Substrat mittels einer Säure geätzt werden. Beispielsweise kann dies mittels HF erfolgen.

Nachfolgend soll die Erfindung anhand von Ausführungsbeispielen und Figuren ohne Beschränkung des allgemeinen Erfindungsgedankens näher erläutert werden. Dabei zeigt:

Fig. 1    das erfindungsgemäß vorgeschlagene Messprinzip zum optischen Auslesen des photoakustischen Sensors gemäß einer Ausführungsform der Erfindung.

Fig. 2    illustriert eine erste Ausführungsform eines erfindungsgemäß vorgeschlagenen photoakustischen Sensors.

Fig. 3    illustriert eine zweite Ausführungsform eines photoakustischen Sensors gemäß der vorliegenden Erfindung.

Fig. 4    zeigt eine dritte Ausführungsform des photoakustischen Sensors gemäß der vorliegenden Erfindung.

Fig. 5    zeigt eine Ausführungsform eines Sensorsystems mit einer Mehrzahl von Sensoren.

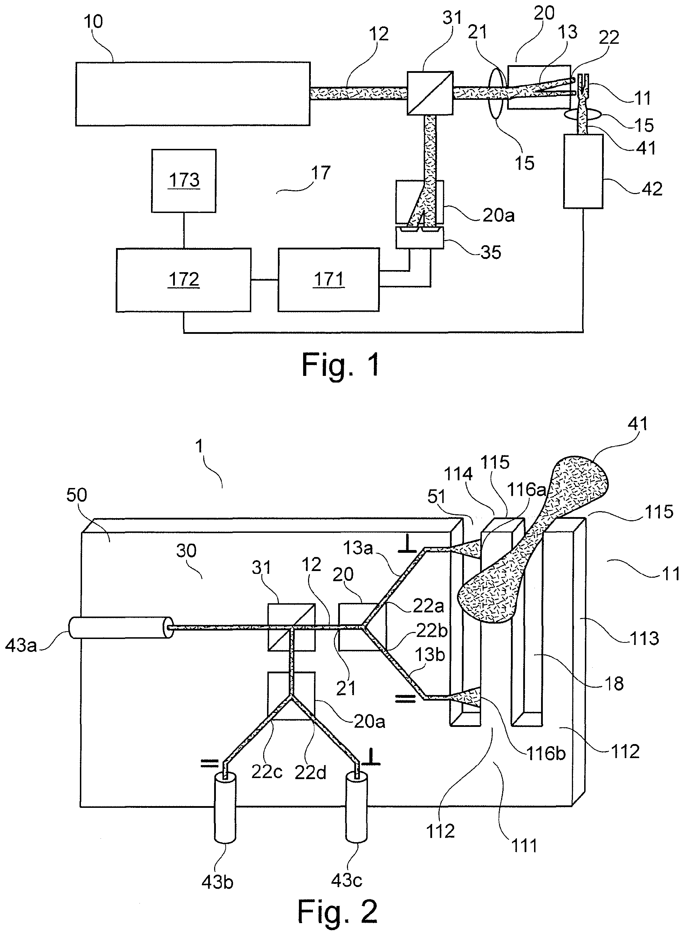

Fig. 1 zeigt eine Ausführungsform des erfindungsgemäß vorgeschlagenen Messprinzips zum optischen Auslesen des photoakustischen Sensors. Das Gas, welches die nachzuweisenden Moleküle enthält, umgibt einen Resonanzkörper 11. Der Resonanzkörper 11 kann in einigen Ausführungsformen der Erfindung zumindest zwei in etwa parallel angeordnete Elemente aufweisen, welche jeweils mit einem Fußpunkt an einem Verbindungselement fixiert sind und an ihrem dem Fußpunkt entgegengesetzten Ende frei auskragen. In diesem Fall befindet sich der zur Aufnahme des Gases mit den nachzuweisenden Molekülen bestimmte Raum 18 zwischen den zwei in etwa parallel angeordneten Elementen.

Die nachzuweisenden Moleküle werden mittels eines Lichtstrahles 41 angeregt. Der Lichtstrahl 41 kann mittels eines Lasers 42 bereitgestellt werden. Der Laser 42 kann beispielsweise ein Diodenlaser oder ein Femtosekundenlaser sein. Dementsprechend enthält der Lichtstrahl 41 eine spektral schmalbandige Laserstrahlung, welche zumindest einen elektronischen Übergang, einen Rotations- oder Schwingungsübergang in den nachzuweisenden Molekülen selektiv anregen kann. Sofern der Laser 42 ein Femtosekundenlaser ist, enthält der Lichtstrahl 41 Laserpulse mit einer Dauer von weniger als 200 fs, weniger 100 fs, weniger als 50 fs oder weniger als 20 fs. In diesem Fall kann durch Modulation der Amplitude und/oder der Phase der Laserpulse selektiv zumindest eine Rotations- und/oder Schwingungsanregung in den nachzuweisenden Molekülen angeregt werden.

Die optische Anregung der nachzuweisenden Moleküle führt zum Übertrag von Translationsenergie auf die Moleküle, welche eine Druckschwankung hervorruft. Die Druckschwankung wiederum führt zu einer Schwingungsanregung des Resonanzkörpers 11.

Die Schwingung des Resonanzkörpers 11 wird mittels einer optischen Einrichtung erfasst. Die Einrichtung zur Erfassung der Schwingung enthält einen Laser 10, beispielsweise einen He-Ne-Laser oder eine Laserdiode. Der Laser 10 stellt einen Laserstrahl 12 zur Verfügung, welcher dazu vorgesehen ist, die Schwingung des Resonanzkörpers 11 durch Messung des Ortes zumindest eines Flächenbereiches 116 des Resonanzkörpers 11 zu erfassen. Hierzu steht bei der in Fig. 1 dargestellten Ausführungsform ein Interferometer zur Verfügung.

Das Interferometer umfasst einen Beamsplitter 31. Der Beamsplitter ist ein optisches Element, welches einen eintreffenden Lichtstrahl 12 in zwei Lichtstrahlen aufspaltet. In einigen Ausführungsformen der Erfindung kann der Beamsplitter einen Würfel enthalten, welcher aus zwei dreieckigen Glasprismen zusammengesetzt ist. An der diagonal durch den Würfel verlaufenden Grenzfläche wird ein erster Teil des Lichtes reflektiert und ein zweiter Teil des Lichtes transmittiert. In anderen Ausführungsformen der Erfindung kann der Beamsplitter einen teildurchlässigen Spiegel enthalten. Der teildurchlässige Spiegel kann eine Glasplatte umfassen, welche mit einer aufgedampften Beschichtung aus einem Metall oder einer Legierung versehen ist. Das Metall oder die Legierung kann Aluminium enthalten. In einigen Ausführungsformen der Erfindung kann der erste Teil des Lichtes und der zweite Teil des Lichtes jeweils etwa 50 % des eingestrahlten Lichtes 12 enthalten.

Das den Beamsplitter in gerader Richtung verlassende Licht gelangt zu einem Beam-Displacer 20. Der Beam-Displacer 20 weist zumindest einen Eingang 21 und zumindest zwei Ausgänge 22 auf. Der Beam-Displacer 20 teilt den eintretenden Lichtstrahl 12 in zumindest zwei austretende Lichtstrahlen 13 auf. In einigen Ausführungsformen der Erfindung kann der Beam-Displacer ein Wollaston-Prisma, ein Rochon-Prisma, ein Glan-Thomson-Prisma oder ein Nicolsches Prima enthalten. Die genannten Prismen enthalten ein doppelbrechendes Material. Die Brechzahl eines solchen doppelbrechenden Materials hängt von der Polarisation des eintretenden Lichtes 12 ab. Dadurch nimmt Licht einer ersten Polarisationsrichtung und Licht einer zweiten Polarisationsrichtung jeweils einen unterschiedlichen Weg durch das Material des Prismas. Auf diese Weise steht am Ausgang des Beam-Displacers ein erster Lichtstrahl 13 mit einer ersten Polarisation und ein zweiter Lichtstrahl 13 mit einer zweiten Polarisation zur Verfügung.

Einer der Lichtstrahlen 13 am Ausgang des Beam-Displacers 20 kann als Referenzstrahl verwendet werden. Der andere Lichtstrahl 13 am Ausgang des Beam-Displacers 20 kann als Nachweisstrahl verwendet werden. Beide Strahlen werden an unterschiedlichen Teilflächen des Resonanzkörpers 11 reflektiert. Durch die Schwingung des Resonanzkörpers 11 erfährt der Nachweisstrahl eine Phasenverschiebung gegenüber dem Referenzstrahl. Beide reflektierten Lichtstrahlen werden wiederum durch die Ausgänge 22 in den Beam-Displacer 20 eingekoppelt. Im Beam-Displacer 20 werden die am Resonanzkörper 11 reflektierten Lichtstrahlen 13 zusammengeführt und verlassen den Beam-Displacer über dessen Eingang 21 in Richtung des Beamsplitters 31.

Im Beamsplitter 31 wird das am Resonanzkörper 11 reflektierte Licht reflektiert und zu einem zweiten Beamsplitter 20a geleitet. Im Beamsplitter 20a wird das am Resonanzkörper 11 reflektierte Licht aufgrund der Polarisationsabhängigkeit des Brechungsindex im Inneren des Beamsplitters 20a wiederum in den Referenzstrahl und den Nachweisstrahl aufgeteilt.

Am Ausgang des Beamsplitters 20a steht eine Photodiode 35 zur Verfügung, welche einen ortsabhängigen Nachweis des eintreffenden Lichtes ermöglicht. In einigen Ausführungsformen der Erfindung kann die Photodiode 35 eine Quadrantenphotodiode sein. In anderen Ausführungsformen der Erfindung kann die Photodiode 35 durch zwei Photodioden gebildet sein, von welchen eine den Nachweisstrahl und eine den Referenzstrahl detektiert.

Das elektrische Signal der Photodiode 35 wird mittels einer Elektronik 171 erfasst. Die Elektronik 171 kann dabei eine Spannungsversorgung enthalten, mit welcher eine Bias-Spannung an die Photodiode 35 angelegt werden kann. Weiterhin kann die Elektronik 171 einen Vorverstärker und/oder einen Diskriminator enthalten, mit welchem die Signale der Photodiode 35 weiterverarbeitet werden. Darüber hinaus kann die Elektronik 171 einen A/D-Wandler enthalten, um die analogen Ausgangssignale der Photodiode 35 mittels einer digitalen Elektronik weiter zu verarbeiten. In einigen Ausführungsformen der Erfindung kann die Elektronik 171 ein Rechenwerk enthalten, welches den Quotienten aus der Differenz beider Signale und der Summe beider Signale gemäß folgender Formel bildet:

$$f = \frac{a+b}{a-b}$$

In einigen Ausführungsformen der Erfindung kann die Elektronik 171 ein Rechenwerk enthalten, welches die Differenz beider Signale gemäß folgender Formel bildet:

$$f = a - b$$

Zur Erhöhung der Nachweisempfindlichkeit und zur Unterdrückung von Untergrundsignalen kann in einigen Ausführungsformen der Erfindung der Laser 42 mit der Resonanzfrequenz des Resonanzkörpers 11 moduliert werden oder mit einer Frequenz, welche ein ganzzahliges Vielfaches der Resonanzfrequenz darstellt. Auf diese Weise kann das am Ausgang der Elektronik 171 bereitgestellte Messsignal mittels eines Lock-In-Verstärkers 172 ausgewertet werden. Die Daten des Lock-In-Verstärkers 172 können mittels eines digitalen Messsystems 173 gespeichert und/oder visualisiert werden. Das Messsystem 173 kann dabei einen Personalcomputer enthalten.

Fig. 2 zeigt ein Ausführungsbeispiel eines erfindungsgemäß vorgeschlagenen photoakustischen Sensors 1. Der photoakustische Sensor 1 umfasst den Resonanzkörper 11 sowie Teile des Interferometers 30 in einer integrierten Bauform. Gemäß der in Fig. 2 dargestellten Ausführungsform sind der Resonanzkörper 11 und das Interferometer 30 in einem einzigen Substrat 50 monolithisch integriert.

Im Substrat 50 sind zwei Aussparungen 18 und 51 eingebracht, welche zwei längliche Elemente 114 und 113 freistellen. Die Aussparungen können mittels mikromechanischer Bearbeitungsverfahren hergestellt werden. Die Aussparungen 18 und 51 können mittels Ätzen, Sägen, Fräsen oder einer anderen, an sich bekannten Bearbeitungstechnik hergestellt werden, so dass sich der Eindruck eines Schlitzes im Substrat 50 ergibt. Die Aussparungen können eine Breite von etwa 10 $\mu$m bis etwa 500 $\mu$m aufweisen. Die Aussparungen 51 und 18 erfassen das Substrat 50 in seiner gesamten Dicke.

Die Elemente 114 und 113 sind jeweils an einem Fußpunkt 112 mit einem Verbindungselement 111 verbunden. Das dem Fußpunkt 112 entgegen gesetzte Ende 115 kragt frei aus. Auf diese Weise können die länglichen Elemente 114 und 113 mit einer Resonanzfrequenz schwingen, welche von den geometrischen Abmessungen der Elemente 114 und 113 sowie dem Elastizitätsmodul des Materials des Substrates 50 abhängt. In einigen Ausführungsformen können die Elemente 113 und 114 eine Länge von etwa 100 $\mu$m bis etwa 10000 $\mu$m aufweisen und eine Breite von etwa 50 $\mu$m bis etwa 1000 $\mu$m.

Zwischen den länglichen Elementen 113 und 114 befindet sich ein Raum 18, welcher zur Aufnahme der nachzuweisenden Moleküle vorgesehen ist. Zur Anregung der Moleküle steht ein Lichtstrahl 41 zur Verfügung, wie in Zusammenhang mit Fig. 1 beschrieben. Da der Raum 18 durch eine durchgehende Aussparung gebildet wird, welche das Substrat 50 in seiner gesamten Dicke erfasst, kann der Lichtstrahl 41 bei der Ausführungsform gemäß Fig. 2 im Freistrahl zugeführt werden. Der Lichtstrahl 41 wird hierzu in einer Ebene eingestrahlt, welche in etwa senkrecht zur Ebene des Messstrahles 13a und des Referenzstrahles 13b steht. Dadurch wird vermieden, dass der Lichtstrahl 41 unmittelbar auf den Resonanzkörper 11 bzw. das längliche Element 114 trifft und der einwirkende Photonendruck das Messsignal verfälscht.

Zur optischen Erfassung der Schwingung des länglichen Elementes 114 steht ein Interferometer 30 zur Verfügung. Das Interferometer 30 ist ebenso wie der Resonanzkörper 11 monolithisch im Substrat 50 integriert. Das Interferometer 30 umfasst einen Beamsplitter 31, wie in Zusammenhang mit Fig. 1 erläutert. Dem Beamsplitter 31 wird Licht eines Lasers mittels eines Lichtwellenleiters zugeführt. Der Lichtwellenleiter beginnt an einer Steckverbindung 43a, welche zur Aufnahme einer Glasfaser in an sich bekannter Weise vorgesehen ist. An den Ausgängen des Beamsplitters 31 münden weitere Lichtwellenleiter, welche den Beamsplitter 31 mit jeweiligen Beam-Displacern 20 und 20a verbinden.

Der Beam-Displacer 20 weist einen Eingang 21 sowie zwei Ausgänge 22a und 22b auf. Der Beam-Displacer 20 kann ein doppelbrechendes Material enthalten, wie in Zusammenhang mit Fig. 1 erläutert. Am Ausgang 22a des Beam-Displacers 20 steht ein Messstrahl 13a zur Verfügung, welcher auf einer Teilfläche 116a des länglichen Elementes 114 auftrifft. Am Ausgang 22b des Beam-Displacers 20 steht ein Referenzstrahl 13b zur Verfügung, welcher auf einer zweiten Teilfläche 116b des länglichen Elementes 114 auftrifft. Da die Teilfläche 116b näher am Fußpunkt 112 des länglichen Elementes 114 liegt, ist die Schwingungsamplitude des Flächenelementes 116b bei einer Schwingung des Elementes 114 geringer als die Amplitude des Flächenelementes 116a. Aufgrund dieser Differenz erfahren die reflektierten Lichtstrahlen 13a und 13b bei Schwingung des länglichen Elementes 114 eine Phasenverschiebung, welche interferometrisch messbar ist.

Das an den Flächenelementen 116a und 116b reflektierte Licht wird über die Ausgänge 22a und 22b, welche nunmehr als Eingänge des Beam-Displacers 20 fungieren, in den Beam-Displacer 20 eingeleitet und über den Eingang 21, welcher nun als Ausgang fungiert, aus dem Beam-Displacer 20 ausgekoppelt.

Nachfolgend wird das an den Flächenelementen 116a reflektierte Licht am Beamsplitter 31 reflektiert und gelangt in den zweiten Beam-Displacer 20a. Der Beam-Displacer 20a weist zwei Ausgänge 22c und 22d auf. Licht des Referenzstrahles 13b gelangt aufgrund seiner Polarisationsrichtung zum Ausgang 22c des Beam-Displacers 20a. Licht des Messstrahles 13a gelangt aufgrund seiner Polarisationsrichtung, welche von der des Strahles 13b verschieden ist, zum Ausgang 22d des Beam-Displacers 20a. Über entsprechende Lichtwellenleiter, welche im Substrat 50 ausgebildet sind, gelangen die Signale aus den Ausgängen 22c und 22d zu zugeordneten Steckverbindern 43b und 43c. Auch die Steckverbinder 43b und 43c sind in an sich bekannter Weise zur Aufnahme einer Glasfaser vorgesehen. Über diese Glasfaser kann das Licht zu zumindest einer Photodiode und einer Auswerteelektronik geleitet werden, wie in Zusammenhang mit Fig. 1 erläutert.

Die optischen Elemente des Interferometers 30, wie der Beamsplitter 31 und/oder der Beam-Displacer 20 und/oder der Beam-Displacer 20a und/oder die Lichtwellenleiter, welche die genannten Elemente untereinander oder mit den Steckverbindern 43a, 43b und 43c verbinden, können in einigen Ausführungsformen der Erfindung mit Hilfe von Lasermaterialbearbeitung in das Substrat 50 eingebracht werden.

In einer Ausführungsform der Erfindung kann die Lasermaterialbearbeitung das Einstrahlen von Laserpulsen umfassen, welche eine Dauer von weniger als 250 fs, weniger als 100 fs, weniger als 50 fs oder weniger als 20 fs aufweisen. Durch die Wechselwirkung der Laserpulse mit optisch transparenten Materialien, wie beispielsweise Quarzglas, Magnesiumoxid, Langasit, Saphir, Polymethylmethacrylat oder andere Polymeren, kann eine Änderung des Brechungsindex induziert werden. Auf diese Weise ergeben sich im Substrat 50 erste Bereiche mit einem ersten Brechungsindex und zweite Bereiche mit einem zweiten Brechungsindex. An den Übergangsbereichen zwischen den bestrahlten und den nicht bestrahlten Bereichen bildet sich ein Sprung im Brechungsindex aus, an welchem Licht totalreflektiert werden kann. Auf diese Weise kann der bestrahlte Bereich als optisches Element, beispielsweise als Wellenleiter, verwendet werden. Durch Auswahl einer zweidimensionalen Ortskoordinate und einer Fokuslage des Laserstrahles kann die Brechzahländerung dreidimensional im Substrat 50 induziert werden. Eine Optimierung der Oberflächenrauheit kann durch Modulation der Amplitude und/oder Phase der zur Materialbearbeitung eingesetzten Laserpulse erreicht werden.

Weiterhin kann belichtetes Material von einem Ätzmittel angegriffen werden, welches unbelichtetes Material in geringerem Maß angreift. Der Ätzschritt kann beispielsweise als nasschemischer oder als trockenchemischer Ätzschritt ausgeführt werden. Auf diese Weise können auch die mechanischen Strukturen, beispielsweise die Steckverbinder 43 und/oder der Resonator 11 mittels Belichten und Ätzen des Substrates 50 hergestellt werden. Auch die Aussparungen 51 und 18 können auf diese Weise hergestellt werden.

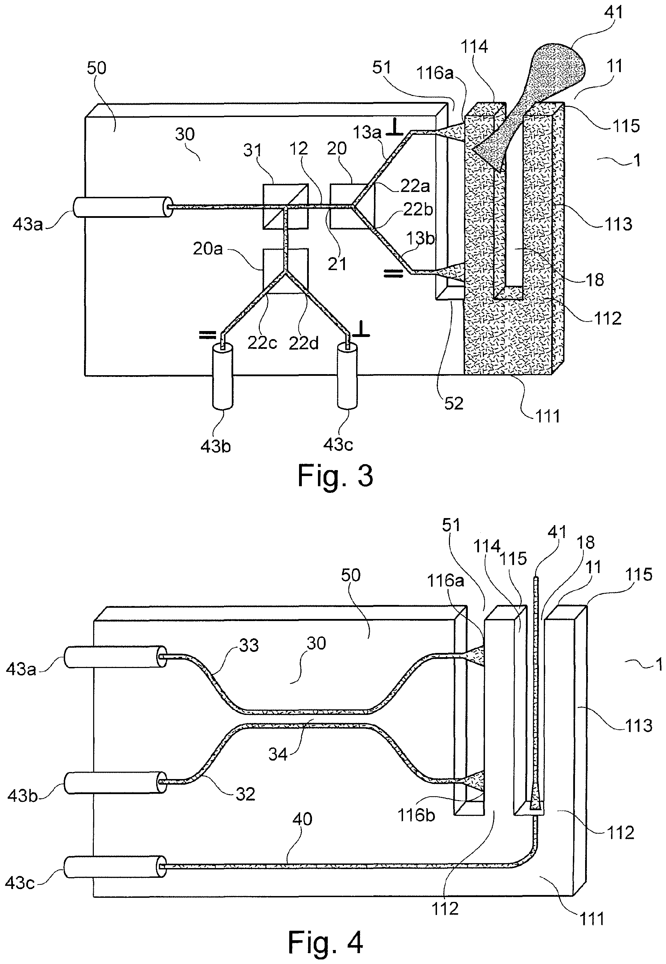

Fig. 3 zeigt eine weitere Ausführungsform der vorliegenden Erfindung. Auch die Ausführungsform gemäß Fig. 3 enthält einen Resonanzkörper 11, welcher einen Raum 18 umgrenzt, in welchem die nachzuweisenden Moleküle einbringbar sind. Zur Anregung der nachzuweisenden Moleküle ist wiederum ein Lichtstrahl 41 vorgesehen, wie in Zusammenhang mit Fig. 1 und 2 beschrieben.

Zur optischen Erkennung der Schwingung des Resonanzkörpers 11 steht eine Einrichtung 17 zur Verfügung. Die Einrichtung 17 enthält ein Interferometer 30, wie in Zusammenhang mit Fig. 2 beschrieben.

Abweichend von Fig. 2 ist der photoakustische Sensor gemäß Fig. 3 nicht vollständig monolithisch integriert. Gemäß Fig. 3 wird der Resonator 11 aus einem ersten Material gefertigt und die Einrichtung 17 zur optischen Erfassung der Schwingung des Resonators 11 wird aus einem Substrat 50 aus einem zweiten Material gefertigt. Auf diese Weise können sowohl für den Resonator 11 als auch für die Einrichtung 17 jeweils optimierte Materialien eingesetzt werden, welche die jeweiligen Aufgaben bestmöglich erfüllen. Beispielsweise kann für die Einrichtung 17 ein Material gewählt werden, in welches mittels Lasermaterialbearbeitung die optischen Komponenten in besonders einfacher Weise eingebracht werden können. Daneben kann für den Resonator 11 ein Material gewählt werden, dessen E-Modul dahingehend optimiert wird, dass die Resonanzfrequenz des Resonators 11 für vorgebbare geometrische Abmessungen in einem gewünschten Bereich liegt. Weiterhin kann das Material des Resonators 11 so gewählt werden, dass der Resonator 11 zumindest auf den Teilflächen 116, auf welchen die Laserstrahlen 13 reflektiert werden, gute Reflexionseigenschaften aufweist.

Die Fügestelle zwischen dem Resonator 11 und der Einrichtung 17 kann beispielsweise durch eine Klebung, eine Verschraubung, eine Spannstelle oder eine Schweißung ausgeführt werden oder weitere, nicht explizit genannte Kontaktierungsverfahren. Durch Ausformen einer Stufe 52 im Substrat 50 wird beim Ausbilden der Fügestelle zwischen der Einrichtung 17 und dem Resonantor 11 die Aussparung 51 erhalten.

In einer Weiterbildung der Ausführungsform gemäß Fig. 3 kann die Einrichtung 17 zweifach vorhanden sein. Auf diese Weise kann mit der ersten Einrichtung 17 die Schwingung des Elementes 114 überwacht werden. Mit der zweiten Einrichtung 17, welche symmetrisch zum Raum 18 am Resonator 11 angebracht ist, kann die Schwingung des Elementes 113 erfasst werden. Auf diese Weise können gleichsinnige Schwingungen der Elemente 113 und 114 von gegenläufigen Schwingungen der Elemente 113 und 114 unterschieden werden, um auf diese Weise ein Untergrundsignal zu erkennen, welches durch die Einwirkung von Umgebungsschall auf dem Resonator 11 entstehen kann.

Fig. 4 zeigt eine weitere Ausführungsform der vorliegenden Erfindung. Auch der photoakustische Sensor gemäß Fig. 4 ist monolithisch in einem einzigen Substrat 50 integriert. Der photoakustische Sensor gemäß Fig. 4 enthält wiederum zwei längliche Elemente 113 und 114, welche einen Raum 18 und eine Aussparung 51 teilweise begrenzen. Die Elemente 113 und 114 sind jeweils mit einem Fußpunkt 112 an einem Verbindungselement 111 befestigt. Das dem Fußpunkt 112 entgegengesetzte Ende 115 kragt frei aus und erlaubt dadurch eine Biegeschwingung der Elemente 114 und 113. Die Erfassung der Schwingung des Elementes 114 erfolgt mittels eines Mach-Zehner-Interferometers 30. Das Mach-Zehner-Interferometer 30 umfasst zwei Lichtwellenleiter 32 und 33, welche in einem Teilabschnitt 34 parallel geführt werden. Auf diese Weise erfolgt eine evaneszente Kopplung der in den beiden Wellenleitern 32 und 33 geführten Signale.

Im Betrieb des photoakustischen Sensors 1 wird über die Steckverbindung 43a, welche zur Aufnahme einer optischen Faser vorgesehen ist, ein kohärentes Lichtsignal, beispielsweise aus einem Laser, eingekoppelt. Das Licht breitet sich über den Wellenleiter 33 aus und erreicht als Nachweisstrahl die Teilfläche 116a des Elementes 114.

Durch die evaneszente Kopplung der Wellenleiter 32 und 33 im Teilabschnitt 34 erreicht ein Teil des eingekoppelten Lichtes als Referenzstrahl die Teilfläche 116b des Elementes 114. Aufgrund der Schwingung des Elementes 114 erfahren die an den Teilflächen 116a und 116b reflektierten Lichtsignale eine Phasenverschiebung. Die reflektierten Lichtsignale durchlaufen erneut die jeweiligen Wellenleiter 32 und 33. Im Bereich des Teilabschnittes 34 kommt es zur Interferenz der phasenverschobenen reflektierten Signale. Das Interferenzmuster kann dann über eine am Steckverbinder 43b mittels einer optischen Faser angeschlossenen Photodiode erfasst werden. Die Signalverarbeitung des von der Photodiode bereitgestellten elektrischen Signales erfolgt dann wie in Zusammenhang mit Fig. 1 beschrieben.

Zur photoakustischen Anregung der in Raum 18 befindlichen nachzuweisenden Moleküle steht wiederum ein Lichtstrahl 41 zur Verfügung. Der Lichtstrahl 41 wird wiederum in einer Ebene eingekoppelt, welche senkrecht zur Ebene der Lichtwellenleiter 32 und 33 verläuft. Anders als in Fig. 2 und 3 dargestellt, wird der Lichtstrahl 41 in der Ausführungsform gemäß Fig. 4 nicht im Freistrahl in dem Raum 18 geführt, sondern mittels eines Wellenleiters 40. Der Wellenleiter 40 endet ebenfalls in einem Steckverbinder 43c, welcher zur Aufnahme einer optischen Faser vorgesehen ist. Der Lichtstrahl 41 kann schmalbandig oder breitbandig, kontinuierlich oder gepulst sein, wie in Zusammenhang mit den Fig. 1 und 2 bereits erläutert.

Unabhängig davon, ob der Lichtstrahl 41 mittels einer optischen Faser 40 oder im Freistrahl in den Raum 18 geführt wird, sollte darauf geachtet werden, dass dieser die Elemente 114 und 113 nicht trifft. Dies kann aufgrund des Photonendruckes des Lichtstrahles 41 zu einem Störsignal führen, welches die Nachweisgrenze bzw. die Sensitivität des photoakustischen Sensors verschlechtert.

Zur Herstellung des photoakustischen Sensors 1 gemäß Fig. 4 können die Lichtwellenleiter 32, 33 und 34 mittels Lasermaterialbearbeitung in das Substrat 50 eingebracht werden, wie in Zusammenhang mit Fig. 2 beschrieben. In anderen Ausführungsformen der Erfindung können Lichtwellenleiter, beispielsweise Glasfasern, auch in ein Substrat 50 eingebettet werden.

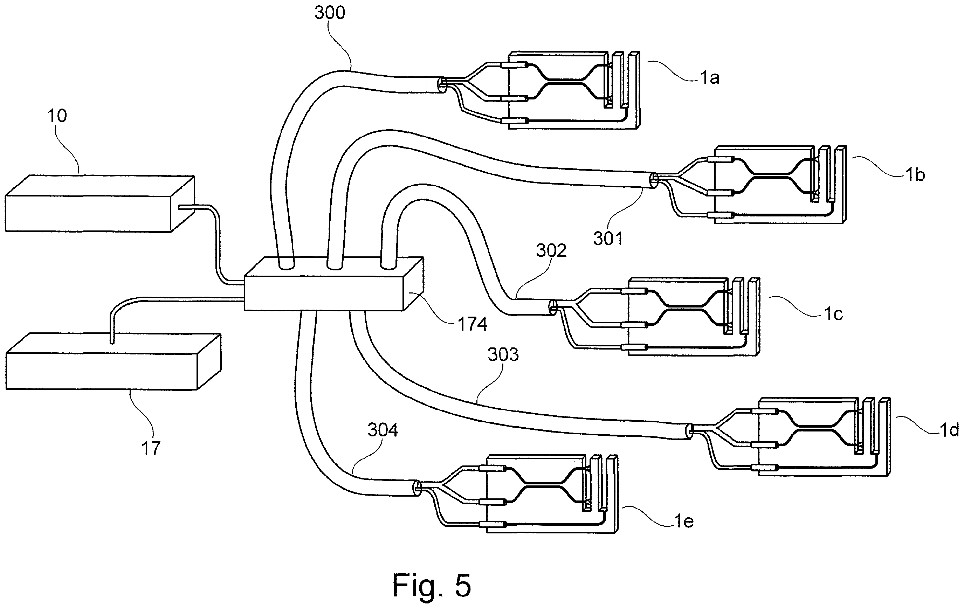

Fig. 5 zeigt ein Sensorsystem mit einer Mehrzahl von Sensoren 1a, 1b, 1c, 1d und 1e, wie in Fig. 4 dargestellt. Die Mehrzahl von Sensoren 1 ist jeweils mittels eines Faserbündels 300, 301, 302, 303 und 304 von Lichtwellenleitern mit einem Multiplexer 174 verbunden.

Der Multiplexer 174 verbindet die jeweiligen Sensoren 1a, 1b, 1c, 1d und 1e sequentiell mit einer Laserlichtquelle 10 und einer Einrichtung 17 zur Auswertung der aufgenommenen Ausgangssignale der Interferometer 30. Auf diese Weise kann in einer Ausführungsform der Erfindung für eine Mehrzahl unterschiedlicher nachzuweisender Moleküle eine Mehrzahl von photoakustischen Sensoren 1 bereitgehalten werden, welche jeweils zyklisch mit der Auswerteeinrichtung 17 verbunden werden. Auf diese Weise können mit nur kurzen Umschaltzeiten des Multiplexers 174 verschiedene unterschiedliche Moleküle in der zu untersuchenden Gasphase nachgewiesen werden. In einer anderen Ausführungsform der Erfindung kann mit nur einer Lichtquelle und/oder einer Auswerteeinrichtung ein vorgebbares nachzuweisendes Molekül an unterschiedlichen Orten nachgewiesen werden.

Um die Unterscheidbarkeit einzelner photoakustischer Sensoren aus der Mehrzahl von photoakustischen Sensoren sicher zu stellen, können in einigen Ausführungsformen der Erfindung die photoakustischen Sensoren individuelle Resonanzfrequenzen aufweisen.

**Patentansprüche**

1. Photoakustischer Sensor (1), enthaltend einen Resonanzkörper (11), welcher einen zur Aufnahme von nachzuweisenden Molekülen bestimmten Raum (18) zumindest teilweise begrenzt und eine Einrichtung (17) zur Erkennung einer Schwingung des Resonanzkörpers (11), welche eine Einrichtung zur optischen Erfassung des Ortes von zumindest einer Teilfläche (116) des Resonanzkörpers (11) enthält, wobei der Resonanzkörper (11) und die Einrichtung (17) zur Erkennung einer Schwingung in einem einzigen Substrat (50) monolithisch integriert sind oder der Resonanzkörper (11) aus einem ersten Material und die Einrichtung (17) aus einem Substrat (50) aus einem zweiten Material gefertigt sind, welche durch eine Fügestelle miteinander verbunden sind, **dadurch gekennzeichnet, dass** der Resonanzkörper (11) durch zumindest eine Aussparung (51) des einzigen Substrates bzw. des ersten Materials gebildet ist, welche das Substrat bzw. das erste Material in seiner gesamten Dicke erfasst.

2. Sensor nach Anspruch 1, **dadurch gekennzeichnet, dass** der Resonanzkörper (11) zumindest zwei in etwa parallel angeordnete Elemente (113, 114) aufweist, welche jeweils mit einem Fußpunkt (112) an einem Verbindungselement (111) fixiert sind und an ihrem dem Fußpunkt entgegen gesetzten Ende (115) frei auskragen, wobei zwischen beiden Elementen (113, 114) der Raum (18) zur Aufnahme von nachzuweisenden Molekülen ausgebildet ist und zwischen dem Substrat (50) und einem Element (114) die Aussparung (51).

**3.** Sensor nach Anspruch 1 oder 2, weiterhin enthaltend zumindest einen Beam-Displacer (20), mit zumindest einem Eingang (21) und zumindest zwei Ausgängen (22), welcher dazu eingerichtet ist, einen Eingangslaserstrahl (12) in eine Mehrzahl von Ausgangslaserstrahlen (13) aufzuteilen, welche dazu vorgesehen sind, an unterschiedlichen Teilflächen (116) des Resonanzkörpers (11) reflektiert zu werden.

**4.** Sensor nach einem der Ansprüche 1 bis 3, bei welchem die Einrichtung (17) zur Erkennung einer Schwingung ein Interferometer (30) enthält, wobei das Interferometer (30) einen optionalen Strahlteiler (31) enthält und/oder das Interferometer (30) zumindest zwei Lichtwellenleiter (32, 33) enthält, welche in einem Teilabschnitt (34) parallel geführt sind, so dass ein Übersprechen der jeweils in den Lichtwellenleitern (32, 33) geführten Signale möglich ist.

**5.** Sensor nach einem der Ansprüche 4 bis 4, weiter enthaltend zumindest eine Photodiode (35), mit welcher das Ausgangssignal des Interferometers nachweisbar ist.

**6.** Sensor nach einem der Ansprüche 1 bis 5, weiterhin enthaltend zumindest einen Wellenleiter (40), mit welchem Licht (41) zur Anregung eines photoakustischen Signales in den zur Aufnahme der nachzuweisenden Moleküle bestimmten Raum (18) zuführbar ist.

**7.** Sensor nach einem der Ansprüche 1 bis 6, **dadurch gekennzeichnet, dass** das Substrat Saphir und/oder Langasit und/oder Magnesiumoxid und/oder Polymethylmethacrylat enthält.

**8.** Sensorsystem mit einer Mehrzahl von Sensoren nach einem der Ansprüche 1 bis 7.

**9.** Sensorsystem nach Anspruch 8, **dadurch gekennzeichnet, dass** jeder Sensor eine Resonanzfrequenz aufweist, welche von der Resonanzfrequenz der anderen Sensoren verschieden ist.

**10.** Verfahren zum photoakustischen Nachweis von Molekülen in der Gasphase mit einem Sensor nach einem der Ansprüche 1 bis 7, welches die folgenden Schritte enthält:

- Einbringen der nachzuweisenden Moleküle in einen Raum (18), welcher von zumindest einem mikromechanischen Resonanzkörper (11) zumindest teilweise begrenzt ist,
- Zuführen von Licht (41) zur Anregung eines photoakustischen Signals in den zur Aufnahme der nachzuweisenden Moleküle bestimmten Raum (18),

- Erkennung einer Schwingung des Resonanzkörpers (11) durch optische Erfassung des Ortes von zumindest zwei Teilflächen (116a, 116b) des Resonanzkörpers (11).

**11.** Verfahren nach Anspruch 10, **dadurch gekennzeichnet, dass** die Wellenlänge und/oder die Pulsform des Lichtes (41) zur Anregung eines photoakustischen Signals verändert wird.

**12.** Verfahren zur Herstellung eines Sensors (1) nach einem der Ansprüche 1 bis 7, enthaltend die folgenden Schritte:

- Bereitstellen eines Substrates (50) mit einem ersten Brechungsindex,
- Einstrahlen einer Laserstrahlung in vorgebbare Raumbereiche des Substrates, so dass sich in den vorgebbaren Bereichen ein zweiter Brechungsindex einstellt.

**13.** Verfahren nach Anspruch 12, welches weiterhin den Verfahrensschritt enthält

- Ätzen von zumindest einem Bereich, in welchen in einem vorhergehenden Verfahrensschritt Laserstahlung eingestrahlt wurde.

**14.** Verfahren nach Anspruch 12 oder 13, **dadurch gekennzeichnet, dass** die Laserstrahlung eine Pulslänge von etwa 10 fs bis etwa 200 fs aufweist.

**15.** Verfahren nach Anspruch 14, **dadurch gekennzeichnet, dass** die Amplitude und/oder die Phase der Laserstrahlung moduliert wird.

**Claims**

**1.** Photoacoustic sensor (1), comprising a resonance body (11), which at least partially delimits a space (18) intended for receiving molecules to be detected, and a device (17) for detecting an oscillation of the resonance body (11), which comprises a device for optically detecting the location of at least one partial surface (116) of the resonance body (11), wherein the resonance body (11) and the device (17) for detecting an oscillation are monolithically integrated in a single substrate (50), or the resonance body (11) is made of a first material and the device (17) is made of a substrate (50) of a second material, which are connected to one another by a joint, **characterized in that** the resonance body (11) is formed by at least one recess (51) of the single substrate or the first material, which detects the substrate or the first material in its entire thickness.

**2.** Sensor according to claim 1, **characterized in that** the resonance body (11) has at least two approximately parallel elements (113, 114), which are each fixed to a connecting element (111) by a base point (112) and freely project at their end (115) opposite the base point, the space (18) for receiving molecules to be detected being formed between the two elements (113, 114) and the recess (51) being formed between the substrate (50) and an element (114).

**3.** Sensor according to claim 1 or 2, further comprising at least one beam displacer (20) having at least one input (21) and at least two outputs (22), which is adapted to divide an input laser beam (12) into a plurality of output laser beams (13), which are intended to be reflected on different partial surfaces (116) of the resonance body (11).

**4.** Sensor according to any of claims 1 to 3, in which the device (17) for detecting an oscillation contains an interferometer (30), the interferometer (30) containing an optional beam splitter (31) and/or the interferometer (30) containing at least two optical waveguides (32, 33), which are guided in parallel in a partial section (34), so that crosstalk of the signals guided in the optical waveguides (32, 33) in each case is possible.

**5.** Sensor according to any of claims 1 to 4, further comprising at least one photodiode (35) with which the output signal of the interferometer can be detected.

**6.** Sensor according to any of claims 1 to 5, further comprising at least one waveguide (40) with which light (41) for exciting a photoacoustic signal can be supplied into the space (18) intended for receiving the molecules to be detected.

**7.** Sensor according to any of claims 1 to 6, **characterized in that** the substrate contains sapphire and/or langasite and/or magnesium oxide and/or polymethyl methacrylate.

**8.** Sensor system comprising a plurality of sensors according to any of claims 1 to 7.

**9.** Sensor system according to claim 8, **characterized in that** each sensor has a resonance frequency which is different from the resonance frequency of the other sensors.

**10.** Method for the photoacoustic detection of molecules in the gas phase using a sensor according to any of claims 1 to 7, comprising the following steps:

- introducing the molecules to be detected into a space (18), which is at least partially delimited by at least one micromechanical resonance body (11),
- supplying light (41) for excitation of a photoacoustic signal into the space (18) intended for receiving the molecules to be detected,
- detecting an oscillation of the resonance body (11) by optical detection of the location of at least two partial surfaces (116a, 116b) of the resonance body (11).

**11.** Method according to claim 10, **characterized in that** the wavelength and/or the pulse shape of the light (41) is changed in order to excite a photoacoustic signal.

**12.** Method for producing a sensor (1) according to any of claims 1 to 7, comprising the steps of:

- providing a substrate (50) having a first refractive index,
- irradiating a laser radiation into predeterminable spatial areas of the substrate, so that a second refractive index appears in the predeterminable areas.

**13.** Method according to claim 12, which also contains the method step of

- etching at least one area into which laser radiation was irradiated in a previous method step.

**14.** Method according to claim 12 or 13, **characterized in that** the laser radiation has a pulse length of about 10 fs to about 200 fs.

**15.** Method according to claim 14, **characterized in that** the amplitude and/or the phase of the laser radiation is modulated.

**Revendications**

**1.** Capteur photoacoustique (1), comportant un corps résonateur (11) qui délimite au moins partiellement un espace (18) destiné à recevoir des molécules à mettre en évidence, et comportant un moyen (17) de détection d'une oscillation du corps résonateur (11), qui comprend un moyen de détection optique de la localisation d'au moins une surface partielle (116) du corps résonateur (11), le corps résonateur (11) et le moyen (17) de détection d'une oscillation étant intégrés de manière monolithique dans un substrat unique (50), ou le corps résonateur (11) étant réalisé en un premier matériau et le moyen (17) étant réalisé à partir d'un substrat en un second matériau, qui sont joints l'un à l'autre par un emplacement d'assemblage, **caractérisé en ce que** le corps résonateur (11) est formé par au moins un évidement (51) du substrat unique ou par le premier matériau, évidement qui traverse le substrat ou le premier matériau dans toute son épaisseur.

**2.** Capteur selon la revendication 1, **caractérisé en ce que** le corps résonateur (11) comprend au moins deux éléments (113, 114) agencés approximativement parallèlement l'un à l'autre qui sont chacun fixés à un point de pied (112) d'un élément de liaison (111) et qui font librement saillie à leur extrémité (115) opposée au point de pied, l'espace (18) de réception des molécules à mettre en évidence étant réalisé entre les deux éléments (113, 114), et l'évidement (51) étant réalisé entre le substrat (50) et un élément (114).

**3.** Capteur selon la revendication 1 ou 2, comprenant en outre au moins un organe de déplacement de faisceau (20) qui présente au moins une entrée (21) et au moins deux sorties (22) et qui est conçu pour subdiviser un faisceau laser d'entrée (12) en une pluralité de faisceaux laser de sortie (13) qui sont prévus pour être réfléchis sur différentes surfaces partielles (116) du corps résonateur (11).

**4.** Capteur selon l'une des revendications 1 à 3, dans lequel le moyen (17) de détection d'une oscillation comprend un interféromètre (30), l'interféromètre (30) comprenant un séparateur de faisceau optionnel (31) et/ou l'interféromètre (30) comprenant au moins deux guides d'ondes lumineuses (32, 33) qui sont menés en parallèle sur un tronçon partiel (34), de sorte qu'une diaphonie des signaux respectifs menés dans les guides d'ondes lumineuses (32, 33) est possible.

**5.** Capteur selon l'une des revendications 1 à 4, comprenant en outre au moins une photodiode (35) permettant de mettre en évidence le signal de sortie de l'interféromètre.

**6.** Capteur selon l'une des revendications 1 à 5, comprenant en outre au moins un guide d'ondes (40) permettant d'amener une lumière (41) d'excitation d'un signal photoacoustique jusque dans l'espace (18) destiné à recevoir les molécules à mettre en évidence.

**7.** Capteur selon l'une des revendications 1 à 6, **caractérisé en ce que** le substrat contient du saphir et/ou du langasite et/ou de l'oxyde de magnésium et/ou du polyméthyle-méthacrylate.

**8.** Système à capteurs comprenant une pluralité de capteurs selon l'une des revendications 1 à 7.

**9.** Système à capteurs selon la revendication 8, **caractérisé en ce que** chaque capteur présente une fréquence de résonance qui diffère de la fréquence de résonance des autres capteurs.

**10.** Procédé de mise en évidence photoacoustique de molécules dans la phase gazeuse au moyen d'un capteur selon l'une des revendications 1 à 7, comprenant les étapes suivantes consistant à :

- introduire les molécules à mettre en évidence dans un espace (18) qui est au moins partiellement limité par au moins un corps résonateur (11) micromécanique,
- amener une lumière (41) pour exciter un signal photoacoustique dans l'espace (18) destiné à recevoir les molécules à mettre en évidence,
- détecter une oscillation du corps résonateur (11) par détection optique de la localisation d'au moins deux surfaces partielles (116a, 116b) du corps résonateur (11).

**11.** Procédé selon la revendication 10, **caractérisé en ce que** la longueur d'onde et/ou la forme d'impulsion de la lumière (41) d'excitation d'un signal photoacoustique est modifiée.

**12.** Procédé de réalisation d'un capteur (1) selon l'une des revendications 1 à 7, comprenant les étapes suivantes consistant à :

- fournir un substrat (50) ayant un premier indice de réfraction,
- injecter un rayonnement laser dans des zones spatiales données du substrat, de sorte qu'un second indice de réfraction s'établit dans les zones données.

**13.** Procédé selon la revendication 12, comprenant en outre l'étape consistant à :

- graver au moins une zone dans laquelle un rayonnement laser a été injecté dans une étape précédente du procédé.

**14.** Procédé selon la revendication 12 ou 13, **caractérisé en ce que** le rayonnement laser présente une longueur d'impulsion d'environ 10 fs à environ 200 fs.

**15.** Procédé selon la revendication 14, **caractérisé en ce que** l'amplitude et/ou la phase du rayonnement laser est modulée.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010028865 A

**In der Beschreibung aufgeführte Nicht-Patentliteratur**

- **A. A. KOSTEREV et al.** Quartz-enhanced photoacoustic spectroscopy. *Optics Letters,* 2002, vol. 27 (21), 1902

- **FIREBAUGH et al.** Miniaturization and Integration of Photoacoustic Detection with a Microfabricated Chemical Reactor System. *JOURNAL OF MICROELECTROMECHANICAL SYSTEMS,* 01. Juni 2001, vol. 10 (2